## Europäisches Patentamt
## European Patent Office
## Office européen des brevets

(19)

(11) Numéro de publication: **0 019 525**
B1

(12)

# FASCICULE DE BREVET EUROPEEN

(45) Date de publication du fascicule du brevet: **08.06.83**

(51) Int. Cl.³: **F 16 F 15/12, F 16 D 13/68**

(21) Numéro de dépôt: **80400629.4**

(22) Date de dépôt: **09.05.80**

(54) Dispositif amortisseur de torsion, en particulier friction d'embrayage, notamment pour véhicule automobile.

(30) Priorité: **11.05.79 FR 7911968**

(43) Date de publication de la demande:
**26.11.80 Bulletin 80/24**

(45) Mention de la délivrance du brevet:
**08.06.83 Bulletin 83/23**

(84) Etats contractants désignés:
**DE FR GB IT**

(56) Documents cités:
DE - A - 1 941 813
FR - A - 903 072
FR - A - 1 081 958
US - A - 3 296 887
US - A - 3 421 343
US - A - 3 811 545

(73) Titulaire: **VALEO**
**64 Avenue de la Grande Armée**
**F-75017 Paris (FR)**

(72) Inventeur: **Loizeau, Pierre**
**1 Allée de l'Albain**
**F-92140 Ville D'Avray (FR)**

(74) Mandataire: **CABINET BONNET-THIRION**
**95 Boulevard Beaumarchais**
**F-75003 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif amortisseur de torsion, en particulier friction d'embrayage, notamment pour véhicule automobile

La présente invention concerne d'une manière générale les dispositifs amortisseurs de torsion qui comportent au moins deux parties coaxiales montées rotatives l'une par rapport à l'autre, dans les limites d'un débattement angulaire déterminé, et à l'encontre de moyens élastiques aptes à agir circonférentiellement entre elles, dits ci-après moyens élastiques à action circonférentielle.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie d'un moteur, tandis qu'une autre desdites parties rotatives est portée par un moyeu destiné à être solidarisé en rotation avec un deuxième arbre, en pratique un arbre mené, l'arbre d'entrée d'une boîte de vitesses.

Un tel dispositif permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique, allant du moteur aux arbres de roue, sur laquelle il est inséré.

Ainsi qu'on le sait également, il est avantageux, au moins pour certaines applications, et notamment pour celle relative aux fractions d'embrayage pour véhicules automobiles, que, pour les faibles valeurs du débattement angulaire entre les deux parties rotatives constitutives d'un tel dispositif amortisseur, de torsion, le couple transmis entre celles-ci reste faible.

En effet, cette disposition, qui implique la mise en oeuvre de moyens élastiques à action circonférentielle de faible raideur pour les faibles valeurs de couple, permet notamment d'éliminer les bruits de boîte de vitesses au point mort, à l'arrêt du véhicule concerné, dits ci-après bruits de point mort, notamment à chaud.

Et il apparait que, au moins dans une certaine mesure, il est souhaitable, de ce seul point de vue, que la plage de débattement angulaire au cours de laquelle interviennent ainsi ces moyens élastiques de faible raideur soit aussi étendue que possible.

Mais ceux-ci sont évidemment très rapidement saturés, pour une faible valeur de couple, dès que, une vitesse étant enclenchée, une action est exercée sur l'accélérateur du véhicule concerné, en vue d'un fonctionnement dit "en tirage" de l'ensemble.

Si l'action sur l'accélérateur est suspendue, le couple entre les deux parties rotatives constitutives du disque amortisseur de torsion concerné change de sens, le fonctionnement de l'ensemble devenant alors du type dit "en rétro".

Il en résulte alors un basculement instantané et bruyant, de l'une de ces parties par rapport à l'autre.

Ce basculement, qui intervient également lors du passage d'un fonctionnement "en rétro" à un fonctionnement "en tirage", correspond au rattrapage de jeu à faire entre les deux parties rotatives en question dû à une saturation, d'abord dans un sens, puis dans l'autre, des moyens élastiques de faible raideur intervenant entre elles, et il s'accompagne d'un bruit d'autant plus intense que, d'une part, la plage de débattement angulaire correspondante est importante et que, d'autre part, le rapport de vitesse engagé est court.

Ainsi, deux exigences contradictoires sont à concilier, l'une relative à la mise en oeuvre d'une plage de débattement angulaire dans laquelle n'interviennent, aux valeurs de couple faibles, que des moyens élastiques à action circonférentielle de faible raideur, pour une bonne absorption des bruits de point mort, notamment pour les véhicules à moteur diesel, dont le régime de ralenti est particulièrement bas et les accélérations cycliques particulièrement importantes, l'autre relative au rattrapage de jeu angulaire usuellement lié à une telle plage lors du passage d'un fonctionnement en tirage, accélérateur enfoncé, à un fonctionnement en rétro, accélérateur relâche, et vice versa un tel rattrapage de jeu angulaire étant lui aussi générateur de bruit, et celui-ci étant d'autant plus important que ladite plage est elle-même plus étendue.

Pour surmonter cette difficulté, il a été proposé, dans la demande de brevet européen déposée le 18 Février 1980 sous le No 80400225.1, et publiée sous le no. EP—A—15203, de mettre en oeuvre un organe de verrouillage sensible à la force de centrifuge, à l'encontre de moyens de rappel et monté ainsi mobile de manière réversible entre une position rétractée d'attente, pour laquelle il est sans effet, et laisse donc une libre capacité d'action aux moyens élastiques à action circonférentielle interposés entre les deux parties concernées, et une position déployée de service pour laquelle, au-delà d'une vitesse de rotation déterminée liée à ces moyens de rappel, il assure un appui circonférentiel positif d'une desdites parties sur l'autre, pour l'un an moins des sens de rotation, et met donc hors service lesdits moyens élastiques à action circonférentielle.

Bien que cette disposition ait donné et donne satisfaction, elle peut, pour certains véhicules, se trouver en défaut ou être difficile à mettre en oeuvre, lorsque la vitesse de rotation du moteur est faible.

c'est le cas notamment pour les véhicules équipés d'un moteur diesel qui, développant un couple moteur constant, autorise le maintien engagé d'une vitesse même pour les faibles vitesses de rotation.

Par exemple, il est possible de maintenir engagée une vitesse jusqu'à environ 1000 tours/mn, alors que le ralenti du moteur est de l'ordre de 750 tours/mn.

Par conséquent, si, à une vitesse de rotation aussi faible du moteur, le conducteur lève le pied, il ne subsiste plus qu'un écart de 250 tours/mn pour permettre l'intervention de l'organe de verrouillage sensible à la force centrifuge, et cet écart peut être insuffisant pour que cette intervention se développe correctement.

La présente invention a d'une manière générale pour objet une disposition donnant satisfaction en toute sécurité, même dans le cas de faibles vitesses de rotation.

De manière plus précise elle a pour objet un dispositif amortisseur de torsion, en particulier friction d'embrayage, notamment pour véhicule automobile, du genre comportant au moins deux parties coaxiales montées rotatives l'une par rapport à l'autre, dans les limites d'un débattement angulaire déterminé, et à l'encontre de moyens élastiques aptes à agir circonférentiellement entre elles pour une plage au moins dudit débattement angulaire, dits moyens élastiques à action circonférentielle, ce dispositif amortisseur de torsion étant caractérisé en ce qu'il comporte au moins un organe de verrouillage, qui est sensible au débattement angulaire entre lesdites parties, à l'encontre de moyens de rappel, et que est ainsi mobile de manière réversible entre une position rétractée d'attente, pour laquelle il est sans effet et laissé donc une libre capacité d'action aux moyens élastiques à action circonférentielle, et une position déployée de service pour laquelle, au-delà d'un débattement angulaire déterminé entre lesdites parties, il assure un appui circonférentiel positif d'une desdites parties sur l'autre, pour l'un au moins des sens de rotation, et met donc hors service lesdits moyens élastiques à action circonférentielle, au moins pour une portion de ladite plage de débattement.

Ainsi, bien qu'un tel organe de verrouillage soit inévitablement sensible à la force centrifuge, en tant que constituant d'un ensemble rotatif, c'est essentiellement en fonction du débattement angulaire entre les deux parties coaxiales constitutives du dispositif amortisseur de torsion considéré, et donc, en pratique, du couple transmis d'une de ces parties à l'autre, que se trouve commandé, de manière positive, pour un angle déterminé dudit débattement, le passage de cet organe de verrouillage de sa position rétractée d'attente à sa position déployée de service.

Autrement dit, un tel passage intervient de manière sûre quelle que soit la vitesse de rotation du dispositif.

Les caractéristiques et avantages de l'invention ressortiront d'ailleurs de la description qui va suivre, à titre d'exemple, en référence aux dessins schématiques annexés sur lesquels:

la figure 1 est une vue partielle en élévation, avec arrachements locaux, d'un dispositif amortisseur de torsion suivant l'invention, pour la position rétractée d'attente des organes de verrouillage qu'il comporte;

la figure 2 est une vue partielle en coupe axiale de ce dispositif, suivant la ligne II—II de la figure 1;

la figure 3 reprend pour partie la figure 1, pour la position déployée de service des organes de verrouillage que comporte le dispositif amortisseur de torsion suivant l'invention;

les figures 4 et 5 sont des vues respectivement analogues à celles des figures 1 et 3 et concernent une variante de réalisation;

la figure 6 est une vue partielle analogue à celle de la figure 1 et concerne une autre variante de réalisation;

les figures 7 et 8 sont des vues partielles en coupe de cette variante, suivant respectivement les lignes VII—VII et VIII—VIII de la figure 6;

la figure 9 est, pour cette variante de réalisation, une vue partielle analogue à celle de la figure 3;

les figures 10 et 11 sont des vues partielles analogues respectivement à celles des figures 1 et 3 concernent une autre variante de réalisation;

la figure 12 est une vue en perspective isolée d'un organe de verrouillage mis en oeuvre dans cette variante de réalisation;

la figure 13 est, avec un arrachement local, une vue partielle en élévation d'un autre dispositif amortisseur de torsion suivant l'invention, en pratique une friction d'embrayage, pour la position rétractée d'attente des organes de verrouillage que comporte ce dispositif amortisseur de torsion;

la figure 14 est une demi-vue en coupe axiale de ce dispositif amortisseur de torsion, suivant la ligne XIV—XIV de la figure 13;

les figures 15 et 16 en sont des vues partielles en coupe, suivant respectivement les lignes XV—XV et XVI—XVI de la figure 13;

la figure 17 est une vue en coupe axiale du ressort de torsion que comporte ce dispositif amortisseur de torsion;

la figure 18 est une vue partielle analogue à celle de la figure 13, pour la position déployée de service des organes de verrouillage;

la figure 19 est un diagramme illustrant pour l'essentiel le mode de fonctionnement d'un dispositif amortisseur de torsion dépourvu d'organes de verrouillage suivant l'invention;

la figure 20 est un diagramme analogue à celui de la figure 19, pour le dispositif amortisseur de torsion suivant l'invention;

les figures 21, 22 et 23 sont des vues respectivement analogues à celles des figures 13, 14 et 18 et concernent une variante de réalisation;

la figure 24 est une vue partielle, partie en élévation et partie en coupe, d'un autre dispositif amortisseur de torsion suivant l'invention, pour la position rétractée d'attente des organes de verrouillage que comporte ce dispositif amortisseur de torsion;

la figure 25 est une vue analogue à celle de la figure 24 pour la position déployée de service de ces organes de verrouillage;

les figures 26 et 27 sont des vues respectivement analogues à celles des figures 24 et 25 et concernent une autre variante de réalisation.

D'une manière générale, et tel qu'illustré par ces figures, le dispositif amortisseur de torsion auquel est destinée l'invention comporte au moins deux parties coaxiales montées rotatives l'une par rapport à l'autre, dans les limites d'un débattement angulaire déterminé, et à l'encontre de moyens élastiques aptes à agir circonférentiellement entre elles pour une plage au moins dudit débattement angulaire, dits moyens élastiques à action circonférentielle.

Par simple commodité, l'une desdites parties sera dite ci-après partie excitante, sous la référence générale A, et l'autre partie excitée, sous la référence générale B.

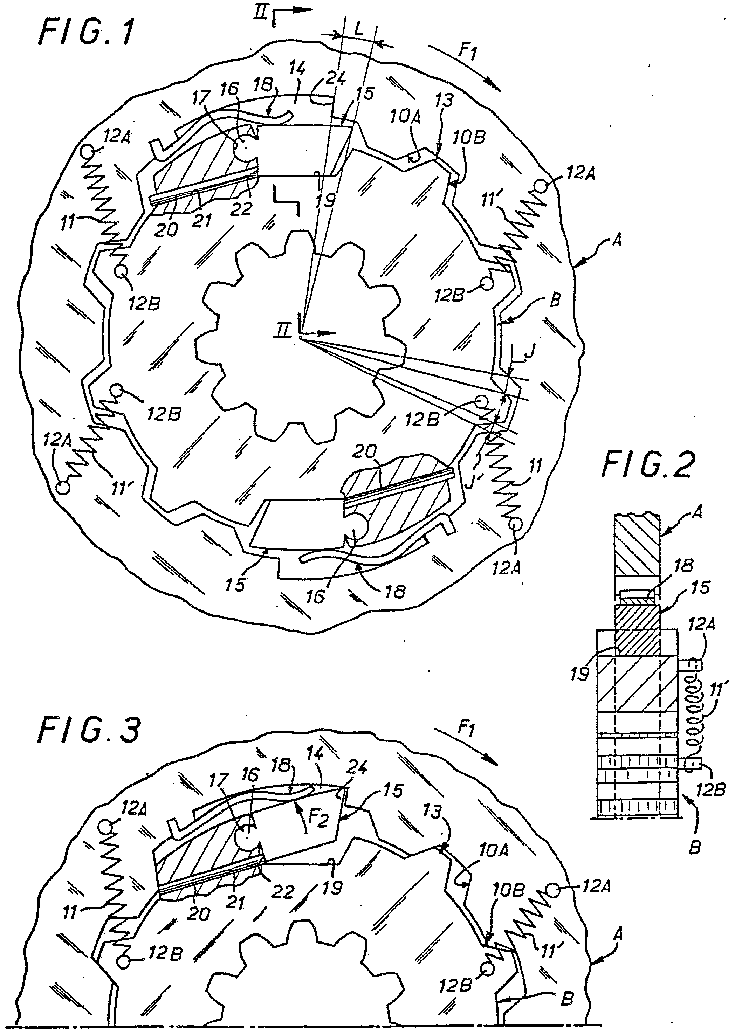

Dans la forme schématique de réalisation illustrée par les figures 1 à 3, la partie excitante A, dont seule une portion est visible sur les figures, s'étend concentriquement autour de la partie excitée B, et des moyens d'engrènement à jeu circonférentiel 13, qui comportent une denture 10A pour la partie excitante A, et une denture 10B pour la partie excitée B, sont prévus entre lesdites parties excitante A et excitée B.

La denture 10B engrène avec la denture 10A, mais pour la configuration de repos de l'ensemble, tel que défini ci-après, et tel que représenté à la figure 1, un jeu angulaire J subsiste entre ces dentures, pour le sens de rotation de la partie excitante A représentée par la flèche F1 de la figure 1, et un jeu angulaire J' pour le sens de rotation opposé.

La configuration de repos de l'ensemble se trouve définie par les moyens élastiques à action circonférentielle interposés entre la partie excitante A et la partie excitée B.

Dans l'exemple de réalisation illustré schématiquement par les figures 1 à 3, ces moyens élastiques à action circonférentielle comportent deux jeux de ressorts 11, 11' tendus en biais entre d'une part des pions 12A solidaires de la partie excitante A, et des pions 12B solidaires de la partie excitée B, les ressorts · 11 intervenant pour le sens de rotation de la partie excitante A repéré par la flèche F1 sur la figure 1, et les ressorts 11' pour le sens de rotation opposé.

Suivant l'invention, il est prévu, entre la partie excitante A et la partie excitée B, au moins un organe de verrouillage sensible au débattement angulaire entre lesdites parties.

En pratique, deux organes de verrouillage sont prévus, en position diamétralement opposées.

Dans la forme de réalisation illustrée par les figures 1 à 3, chacun de ces organes de verrouillage est logé dans un évidement 14 des moyens d'engrènement 13 prévus entre la partie excitante A et la partie excitée B, cet évidement 14 mordant pour partie sur la denture 10A de la partie excitante A et pour partie sur la denture 10B de la partie excitée B.

Il s'agit, dans l'exemple de réalisation représenté, d'un levier d'arc-boutement 15, qui, à l'une de ses extrémités, est monté pivotant sur une première des parties A, B concernées, en pratique la partie excitée B dans l'exemple de réalisation représenté, autour d'un axe parallèle à celui de ces parties, et qui, globalement s'étend tangentiellement à une circonférence de l'ensemble.

Pour son articulation à la partie excitée B, le levier d'arc-boutement 15 présente, en saillie, à son extrémité correspondante, un bossage cylindrique 16, de section circulaire, engagé, suivant un montage du type des montages en queue d'aronde, dans un évidement complémentaire 17 de la partie excitée B, suivant an axe parallèle à l'axe de l'ensemble.

Par une lame de ressort 18 qui prend appui sur la partie excitante A, le levier d'arc-boutement 15 est sollicité en permanence en direction d'une position rétractée d'attente, pour laquelle, tel que représenté à la figure 1, il est en butée contre un épaulement radial 19 de la partie excitée B.

Pour passage du levier d'arc-boutement 15 de cette position rétractée d'attente à une position déployée de service, représentée à la figure 3, il lui est associé un poussoir propre à agir sur lui en position excentrée vis-à-vis de son axe de rotation, en prenant appui sur la partie excitante A.

Dans la forme de réalisation illustrée par les figures 1 à 3, ce poussoir est formé par un doigt de poussée 20 monté coulissant dans un perçage 21 de la partie excitée B et susceptible, d'une part, de prendre appui sur la denture 10A de la partie excitante A, et d'autre part de venir porter sur un épaulement 22 du levier d'arc-boutement 15 décalé latéralement par rapport à l'axe de rotation de celui-ci.

Sous le contrôle de ce poussoir 20, et à l'encontre de la lame de ressort 18 qui constitue à cet égard des moyens de rappel, le levier d'arc-boutement 15 est ainsi monté mobile, de manière réversible, entre sa position rétractée d'attente et sa position déployée de service.

Pour sa position rétractée d'attente, le levier d'arc-boutement 15 est sans effet, en ce sens qu'il laisse un libre débattement angulaire entre la partie excitante A et la partie excitée B, et donc une libre capacité d'action aux ressorts 11, 11'.

Par contre, pour sa position déployée de service, il assure un appui circonférentiel positif de la partie excitante A sur la partie excitée B, son extrémité libre, c'est-à-dire son extrémité opposée à son axe d'articulation, venant alors porter sur un épaulement de butée 24 prévu à cet effet sur la partie excitante A, dans l'évidement 14.

Pour la position rétractée d'attente, le développement circonférentiel L entre, d'une part, l'épaulement de butée 24, et, d'autre part, l'extrémité libre du levier d'arc-boutement 15, correspond en effet, au plus, angulairement, au jeu angulaire J des moyens d'engrènement 13 prévus entre les parties A, B, tel que défini ci-dessus.

En pratique, donc, dans la forme de réalisation illustrée par les figures 1 à 3, les dispositions sont telles que, la partie excitante A étant supposée entraînée en rotation suivant la flèche F1 des figures 1 et 3, le levier d'arc-boutement 15 reste en position rétractée d'attente pour autant que le débattement angulaire relatif entre la partie excitante A et la partie excitée B, qui se trouve entraînée par la partie excitante A par l'intermédiaire des ressorts 11, 11', demeure inférieur au jeu angulaire J.

Par contre, un peu avant absorption de jeu J, car il dépasse circonférentiellement un peu de la partie excitée B, le doigt de poussée 20, qui se trouve refoulé en direction du levier d'arc-boutement 15 par la partie excitante A, provoque une rotation de ce levier d'arc-boutement 15 autour de son axe de rotation, suivant la flèche F2 de la figure 3, au terme de laquelle celui-ci vient en prise avec l'épaulement 24 de la partie excitante A.

Dès lors, si le mouvement relatif de la partie excitante A vis-à-vis de la partie excitée B vient à s'inverser, c'est-à-dire vient à devenir inverse de celui repéré par la flèche F1 sur la figure 3, tout débattement angulaire entre la partie excitante A et la partie excitée B se trouve empêché, la partie excitante A trouvant un appui circonférentiel positif sur la partie excitée B à travers le levier d'arc-boutement 15.

Ainsi, lors d'une inversion du couple entre la partie excitante A et la partie excitée B caractéristique d'un passage d'un fonctionnement en tirage à un fonctionnement en rétro, toute inversion concomitante de débattement angulaire entre ces parties, génératrice de bruit, se trouve évitée.

Bien entendu, lorsque le couple entre la partie excitante A et la partie excitée B revient à une valeur suffisamment faible pour que les dentures 10A, 10B ne soient plus en prise 1' avec l'autre, le levier d'arc-boutement 15 revient, sous la sollicitation de la lame de ressort 18, à sa position rétractée d'attente.

De préférence, des moyens de frottement sont prévus entre ce levier d'arc-boutement 15 et son axe de rotation, pour en retarder ce retour en position rétractée d'attente, et éviter ainsi qu'il ne se produise intempestivement lors d'une inversion de couple.

Par exemple, une garniture de frottement peut être introduite entre le bossage 16 constituant l'axe de rotation du levier d'arc-boutement 15, et le logement 17 dans lequel ce bossage est engagé à rotation (non représentée sur les figures).

Bien entendu, dans ce qui précède, chaque levier d'arc-boutement 15 intervient de manière analogue à celle décrite ci-dessus.

En outre, ainsi qu'on l'aura compris, ces leviers d'arc-boutement 15 interviennent pour le sens de rotation de la partie excitante A, vis-à-vis de la partie excitée B correspondant à l'absorption du jeu angulaire J, mais, si désiré, au moins un levier d'arc-boutement semblable peur être prévu pour le sens de rotation opposé, c'est-à-dire celui correspondant à l'absorption du jeu angulaire J'.

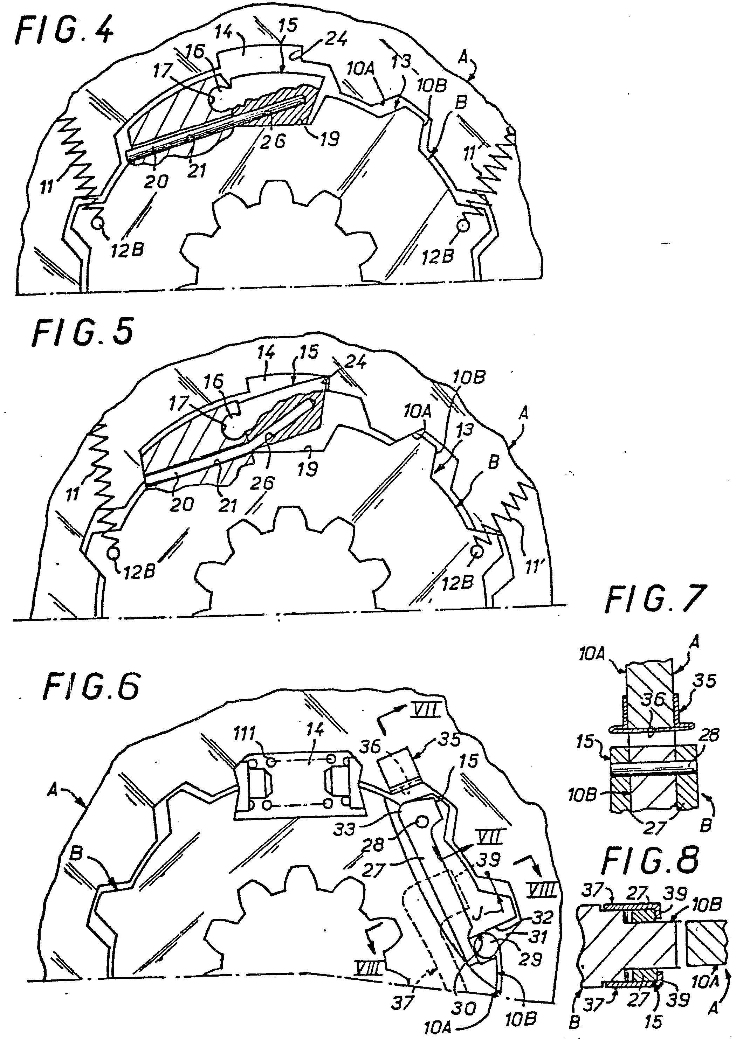

Suivant la variante de réalisation illustrée par les figures 4 et 5, le doigt de poussée 20 est engagé dans un logement borgne 26 du levier d'arc-boutement 15 correspondant, et est élastiquement déformable.

Il constitue ainsi par lui-même les moyens de rappel associés à ce levier d'arc-boutement.

En effet, pour la position déployée de service du levier d'arc-boutement 15, ce doigt de poussée est alors l'objet d'une déformation élastique, en sorte que, à la libération du levier d'arc-boutement 15, il ramène élastiquement celui-ci en position rétractée d'attente.

Dans ce qui précède, chaque levier d'arc-boutement 15 est logé dans un évidement 14 des moyens d'engrènement 13 prévus entre la partie excitante A et la partie excitée B.

Mais, tel qu'illustré par les variantes des figures 6 à 12, un tel évidement 14 peut, de manière connue en soi, être par ailleurs mis à profit pour l'implantation d'un ressort 111, les ressorts 111 correspondants se substituant alors aux ressorts 11, 11' précédemment décrits pour la constitution des moyens élastiques à action circonférentielle interposés entre la partie excitante A et la partie excitée B.

Dans ce cas, le levier d'arc-boutement 15 comporte, tel que représenté, deux bras 27, disposés chacun respectivement de part et d'autre d'une des dentures 10A, 10B concernées, à savoir en pratique, dans l'exemple de réalisation représenté, la denture 10B de la partie excitée B.

Dans la forme de réalisation illustrée par les figures 6 à 9, ces bras 27 forment des pièces distinctes, réunies l'une à l'autre par un même axe de rotation 28, qui traverse la denture 10B.

En outre, dans cette forme de réalisation, à son extrémité opposée à son axe d'articulation 28, le levier d'arc-boutement 15 agit sur un galet 29, qui s'étend axialement dans une échancrure 30 prévue à cet effet à la périphérie de la denture 10B, et qui est susceptible de venir se coincer entre deux épaulements, l'un oblique, 31, formé sur la denture 10A de la partie excitante A, l'autre, droit, 32 formé par le flanc correspondant de ladite denture 10B appartenant à la partie excitée B.

De plus, dans cette forme de réalisation, le poussoir associé au levier d'arc-boutement 15 forme une partie intégrante de celui-ci, chacun des bras 27 de ce levier d'arc-boutement 15 comportant, en position excentrée par rapport à l'axe d'articulation 28, un bossage 33.

Conjointement, la denture 10A de la partie excitante A est adaptée à venir agir sur ces bossages 33 du levier d'arc-boutement 15 un peu avant absorption du jeu angulaire J, car lesdits bossages 33 dépassent circonférentiellement un peu de la partie excitée B, et, dans la forme de réalisation représentée, un étrier 35 est à cet effet engagé sur la tranche d'un épaulement 36 que comporte la partie excitante A en regard de l'extrémité correspondante du levier d'arc-boutement 15.

Enfin, dans la forme de réalisation représentée, les moyens de rappel associés à celui-ci comportent deux plaquettes métalliques 37 formant lames de ressort, lesdites plaquettes étant fixées à l'une de leurs extrémités à la denture 10B de la partie excitée B (non représenté sur les figures) et présentant, à leur autre extrémité, un retour 39 par lequel elles sont susceptibles d'agir sur le levier d'arc-boutement 15, figure 8.

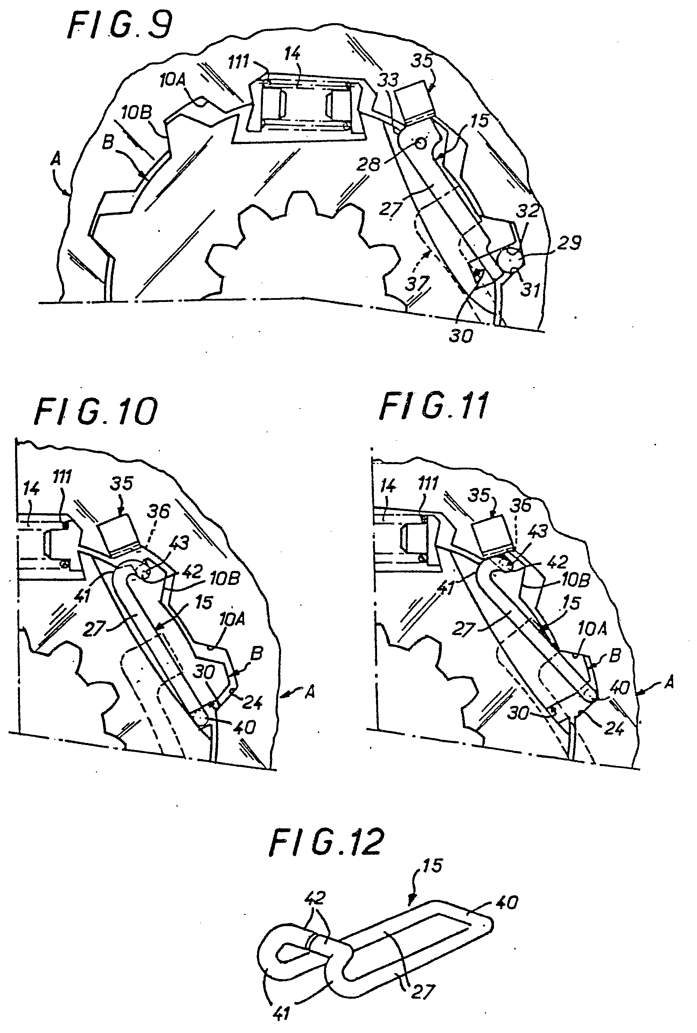

Le fonctionnement de cette forme de réalisation est analogue à celui décrit précédemment: le levier d'arc-boutement 15 est normalement maintenu en position rétractée d'attente, figure 6, mais un peu avant absorption du jeu angulaire J entre la partie excitante A et la partie excitée B, la partie excitante A, par son étrier 35, vient agir sur les bossages 33 et forcer ainsi le levier d'arc-boutement 15 à passer en position déployée de service, figure 9, pour laquelle le galet 29, qui se déplace dans l'échancrure 30 de la partie excitée B, se trouve coincé entre l'épaulement 31 de la partie excitante A et l'épaulement 32 de la partie excitée B, en sorte que la partie excitante A trouve un appui circonférentiel sur la partie excitée B à travers ce galet 29 lors d'une inversion de couple, et les lames de ressort 37 ramènent ensuite, en position rétractée d'attente, le levier d'arc-boutement 15 lorsque le couple entre la partie excitante A et la partie excitée B est revenu à une valeur suffisamment faible.

Suivant la variante de réalisation illustrée par les figures 10 à 12, le levier d'arc-boutement 15 est constitué par un fil globalement plié en boucle, ledit fil présentant donc, outre deux bras latéraux 27, une traverse médiane 40, qui relie l'un à l'autre ces bras latéraux 27, et qui se substitue au galet 29 précédent.

En bout de ces bras latéraux 27, le levier d'arc-boutement 15 présente en outre, deux coudes en forme de crosse 41, qui constituent conjointement le bossage formant poussoir permettant au levier d'arc-boutement 15 d'être basculé, comme décrit ci-dessus, de sa position rétractée d'attente, figure 10, à sa position déployée de service, figure 11.

Enfin, chacun des coudes 41 de ce levier d'arc-boutement 15 présente, à son extrémité, des retours en équerre 42, dirigés l'un vers l'autre et formant tourillons de pivotement, par lesquels ce levier d'arc-boutement 15 est monté pivotant dans une échancrure 43 de la denture 10B de la partie excitée B.

Le fonctionnement de cette variante de réalisation est analogue à celui de la forme de réalisation décrite en référence aux figures 6 à 9, à la différence que, la barrette médiane 40 faisant partie intégrante du levier d-arc-boutement 15, celui-ci est ainsi adapté, par son extrémité concernée, à venir porter par luimême sur l'épaulement de butée 24 prévu à cet effet sur la partie excitée B, comme pour les formes de réalisation décrites en référence aux figures 1 à 8.

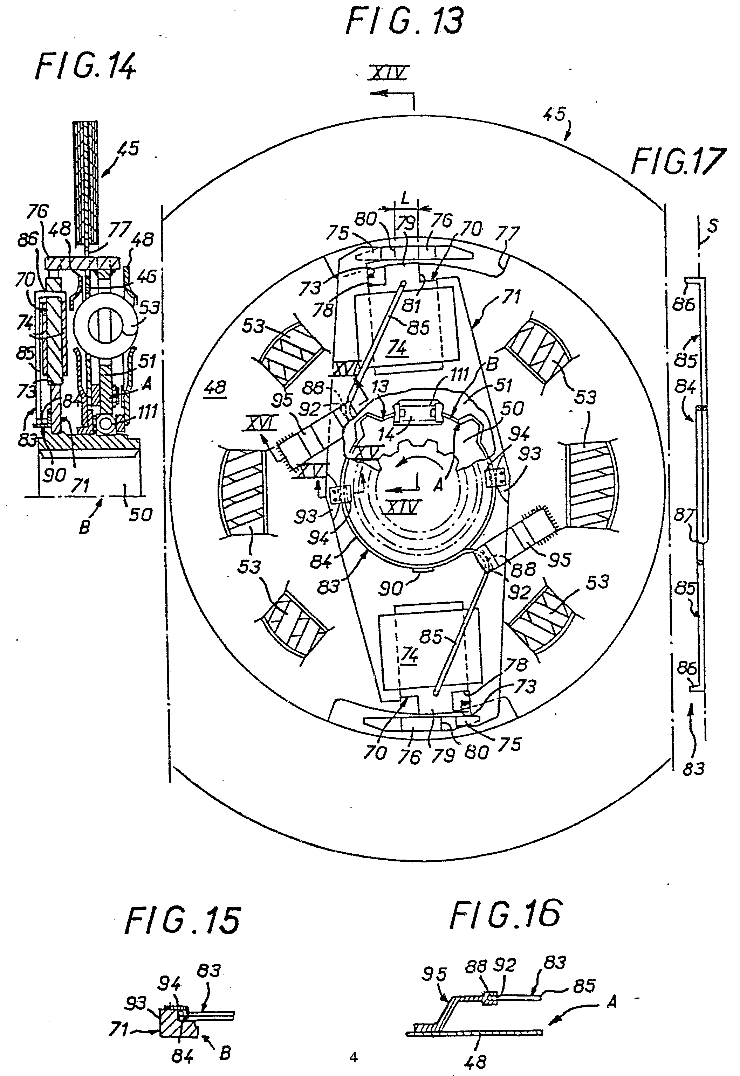

Les figures 13 à 20 illustrent l'application de l'invention à une friction d'embrayage comportant trois parties coaxiales rotatives deux à deux les unes par rapport aux autres, une première constituée par un disque de fraction 45 et deux rondelles de guidage 48, une deuxième constituée par un voile de moyeu 51, et une troisième constituée par ce moyeu 50.

Une telle friction d'embrayage se trouve décrite en détail dans le brevet français déposé le 29 Août 1973 sous le No 73 31172, et publié sous le No 2.242.606, ainsi que dans l'addition déposée le 12 Avril 1974 sous le No 74 12915 et publiée sous le No 2.270.491, rattachée à ce brevet.

Cette friction d'embrayage ne fait pas partie par elle-même de la présente invention, et elle ne sera donc pas décrite ici dans tous ses détails; il suffira de rappeler qu'entre la partie constituée par le disque de friction 45 et les rondelles de guidage d'une part, et celle constituée par le voile de moyeu 51, d'autre part, interviennent circonférentiellement des ressorts 53.

Seuls seront pris en considération ici une partie excitante A, constituée par le voile de moyeu 51, et une partie excitée B, constituée par le moyeu 50.

Entre cette partie excitante A et cette partie excitée B sont prévus des moyens d'engrènement 13 à jeux angulaires J, J' et ressorts 111, du type de ceux mis en oeuvre dans les formes de réalisation décrites en détail en référence aux figures 1 à 12.

Comme précédemment sont mis en oeuvre deux organes de verrouillage, sensibles au débattement angulaire entre la partie excitante A et la partie excitée B, et disposés en positions diamétralement opposées.

Dans la forme de réalisation représentée, il s'agit de simples plaquettes 70.

Pour leur maintien et leur guidage, l'une des parties A, B, concernées, le moyeu 50 dans l'exemple représenté, porte radialement un flasque 71, qui en est solidaire en rotation, ce flasque étant par exemple, suivant une technique connue en elle-même, engagé à force sur le moyeu 50 et serti sur celui-ci.

Le flasque 71 comporte deux guides, qui sont allongés radialement, et avec chacun desquels est en prise une plaquette 70.

Dans l'exemple de réalisation représenté, un tel guide est simplement constitué par un évidement 73 du flasque 71, et la plaquette 70 correspondante est simplement montée coulissante dans un tel évidement 73.

Pour le maintien axial d'une plaquette 70, deux lamelles 74 sont rapportées sur celle-ci, par exemple par soudage, de part et d'autre du flasque 71, et ces lamelles 74 débordent circonférentiellement de l'évidement 73 correspondant.

A l'extrémité de chaque évidement 73, le flasque 71 présente un bec de retenue 75, qui fait saillie circonférentiellement dans ledit évidement 73.

Conjointement, l'autre des parties A, B, le voile de moyeu 51 dans l'exemple de réalisation représenté, porte, en correspondance avec chaque bec de retenue 75 du flasque 71, une patte 76, qui s'étend axialement en direction de ce flasque, à la faveur d'un passage 77 du voile 46 du disque de friction 45, et qui se prolonge axialement suffisamment pour interférer avec le trajet de la plaquette 70 correspondant dans l'évidement 73 dans laquelle celle-ci peut coulisser.

Au-delà d'un épaulement 78 propre à coopérer en butée radiale avec le bec de retenue 75 correspondant, chaque plaquette 70 comporte un prolongement radial 79 susceptible de s'insérer circonférentiellement entre ce bec de retenue 75 et la patte axiale 76 correspondante.

En pratique, pour la position de repos représentée à la figure 13, le développement circonférentiel L entre, d'une part, la tranche latérale 80 d'une patte 76 la plus proche, circonférentiellement, du bec de retenue 75 correspondant, et, d'autre part, la tranche latérale 81 du prolongement radial 79 de la plaquette 70 correspondante la plus éloignée, circonférentiellement, de ce bec de retenue 75, correspond, au plus, angulairement, au jeu angulaire J des moyens d'engrènement 13 prévus entre les parties A, B, tel que défini ci-dessus.

Et, bien entendu, chaque bec de retenue 75 a un développement circonférentiel suffisamment réduit pour ne pas s'opposer à un engagement, en regard de sa propre tranche latérale, du prolongement 79 de la plaquette 70 correspondante.

Dans l'exemple de réalisation représenté, les deux plaquettes 70 ont en commun les moyens de rappel qui leur sont associés, et ceux-ci sont constitués par un ressort de torsion 83 dont la partie médiane de torsion 84 entoure le moyeu 50 de la partie excitée B, et dont les branches 85 sont chacune respectivement en prise, par un retour axial 86, avec les plaquettes 70, un tel retour 86 étant engagé dans un passage prévu à cet effet dans une telle plaquette et replié à son extrémité au-delà de celui-ci.

Dans l'exemple de réalisation représenté, le ressort de torsion 83 est disposé axialement au-delà du flasque 71 par rapport au disque de friction 15 mais il va de soi que, en variante, il peut aussi bien être disposé entre ce flasque 71 et ce disque de friction 15.

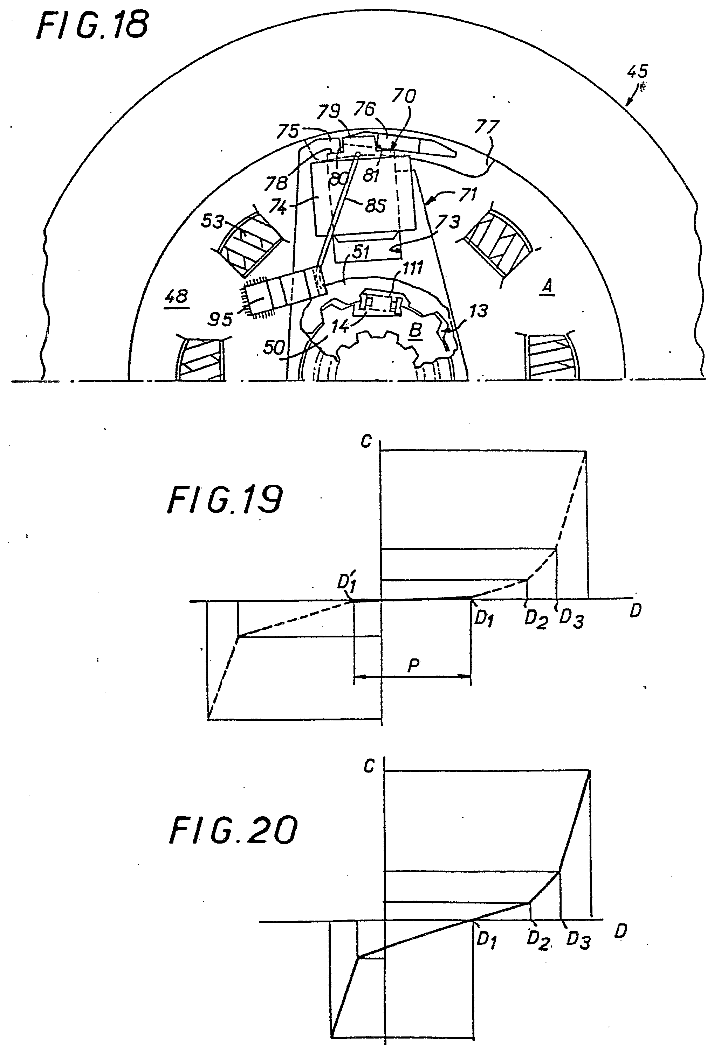

Suivant une particularité de l'invention, et ainsi qu'il est visible à la figure 17, la partie médiane de torsion 84 du ressort 83 dont sont issues les branches 85 de celui-ci résulte d'un enroulement conjoint en hélice des deux brins d'un fil au préalable plié en U.

Autrement dit, cette partie médiane de torsion 84 présente une extrémité, elle fait un coude 87 à cette extrémité, et la plan transversal, perpendiculaire à l'axe de l'ensemble, qui passe par ce coude 87 est un plan de symétrie S pour le ressort 83; ce plan de symétrie S est schématisé en trait interrompu à la figure 17.

A son raccordement à la partie médiane 84 dont elle est issue, chaque branche 85 du ressort 83 forme un coude 88, en direction de la plaquette 70 correspondante, figures 13 et 16.

A la périphérie interne de la partie médiane de torsion 84 de ressort 83, des plaquettes en équerre 90 sont rapportées de place en place, par exemple par soudure, sur le flasque 71, pour un maintien convenable de ce ressort de torsion 83 figures 13 et 14.

Dans la forme de réalisation illustrée par les figures 13 à 18, pour passage en position déployée de service des plaquettes 70, la partie médiane de torsion 84 du ressort 83 est bloquée angulairement sur le moyeu 50 qu'elle entoure, qui appartient à la partie excitée B, et à chacune des branches 85 de ce ressort de torsion il est associé en épaulement 92, qui est solidaire de la partie excitante A, et sur lequel une telle branche 85 est susceptible de venir porter par son coude 88.

Dans l'exemple de réalisation représenté, la solidarisation au moyeu 50 de la partie médiane de torsion 84 du ressort 83 se fait par pincement, cette partie médiane se trouvant disposée entre, d'une part deux bossages 93, diamétralement opposés, du flasque 71 solidaire du moyeu 50, figures 13 et 15, et d'autre part, des pattes 94 rapportées, par exemple par soudage, sur ces bossages 93.

En outre, dans l'exemple de réalisation représenté, chaque épaulement 92 est formé en bout d'une patte 95 rapportée, par exemple par soudage, sur la rondelle de guidage 48 correspondante, qui appartient à la partie excitante A, figures 13 et 16.

En l'absence des organes de verrouillage suivant l'invention, le diagramme illustratif du fonctionnement de la friction serait celui de la figure 19, qui correspond à l'art antérieur.

Sur ce diagramme est rapporté en abscisses le débattement angulaire D, et en ordonnées le couple C transmis entre le disque de friction 45 et le moyeu 50.

Pour les faibles valeurs de ce couple, et c'est le cas au point mort, véhicule à l'arrêt, seuls interviennent les ressorts 111 mis en oeuvre entre le voile de moyeu 51 et le moyeu 50, c'est-à-dire, donc, entre la partie excitante A et la partie excitée B prises ici en considération.

Ces ressorts 111, qui sont de faible raideur, constituent un premier étage d'amortissement, propre à l'élimination des bruits de point mort.

Dès que, pour un fonctionnement en tirage, le couple augmente, ce premier étage d'amortissement se trouve saturé, et, le jeu angulaire J défini ci-dessus étant absorbé, le voile de moyeu 51 vient en prise directe avec le moyeu 50, pour une valeur D1 du débattement correspondant à ce jeu angulaire J.

Entre alors en action un premier groupe des ressorts 53 mis en oeuvre entre les rondelles de guidage 48 et la voile de moyeu 51, puis, successivement, pour des valeurs D2, De du débattement angulaire, un deuxième et un troisième groupes de ces ressorts, jusqu'à saturation du deuxième étage d'amortissement formé conjointement par l'ensemble des ressorts 53, suivant des modalités qui, ne faisant pas partie de la présente demande, ne seront pas décrites en détail ici.

Pour un fonctionnement en rétro, un processus analogue se développe, avec la réserve que, dans l'exemple de réalisation représenté, les deuxième et troisième groupes des ressorts 53 entrent alors simultanément en action, étant entendu qu'ils pourraient aussi bien entrer successivement en action, comme précédemment.

Globalement, les ressorts 111 du premier étage d'amortissement agissent ainsi dans une zone de filtration des bruits de point mort P allant du débattement angulaire D1 en tirage, à un débattement angulaire D'1 en rétro.

A l'arrêt, figure 13, les plaquettes 70 constituant les organes de verrouillage suivant l'invention occupent en pratique leur position rétractée d'attente, en appui contre le fond de l'évidement 73 correspondant du flasque 71.

Ces plaquettes 70 sont alors sans effet.

Elles laissent donc leur libre capacité d'action aux ressorts 111 et tout se passe comme si entre les débattement angulaires D1, D'1, le diagramme représentatif du fonctionnement de la friction suivant l'invention était encore celui de la figure 19.

C'est la raison pour laquelle, sur cette figure 19, ce diagramme est représenté en trait plein pour la zone de filtration P, et en traits interrompus à l'extérieur de celle-ci.

En effet, pour un fonctionnement en tirage, et au fur et à mesure du débattement angulaire correspondant entre la partie excitante A et la partie excitée B, les épaulements 92 prévus à cet effet sur la partie excitante A viennent pousser les coudes 88 des branches 85 du ressort de torsion 83, et, sous cette sollicitation, celles-ci provoquent progressivement un déplacement radial des plaquettes 70 le long de leurs guides, en direction du bec de retenue 75 correspondant.

Conjointement, les pattes axiales 76 du voile de moyeu 51 s'écartent progressivement, circonférentiellement de ces becs de retenue 75.

Pour le débattement angulaire D1 correspondant à l'absorption du jeu angulaire J entre la partie excitante A et la partie excitée B, les plaquettes 70 occupent dès lors une position déployée de service pour laquelle, figure 18, elles sont radialement en butée, par leur épaulement 78, contre les becs de retenue 75, et ont leur prolongement 79 circonférentiellement inséré entre ceux-ci et les pattes axiales 76 du voile de moyeu 51.

Par suite, si l'ensemble passe d'un mode de fonctionnement en tirage à un mode de fonctionnement en rétro, les pattes axiales 76 viennent porter sur les prolongement 79 des plaquettes 70, et le voile de moyeu 51 trouve ainsi un appui circonférentiel positif sur le moyeu 50, à travers les pattes axiales 76, les prolongements 79 des plaquettes 70, et la flasque 71, sans qu'il y ait un débattement angulaire inverse entre ce voile de moyeu 51 et le moyeu 50, et donc sans qu'il y ait production d'un quelconque bruit.

Autrement dit, les ressorts 111 de l'étage de faible raideur se trouvent alors mis hors service.

Dans le diagramme représentatif du fonctionnement correspondant, figure 20, la zone de filtration des bruits de point mort précédemment décrite sous la référence P à la figure 19 se trouve éliminée.

Tout se passe donc comme si seuls intervenaient alors, pour la filtration des bruits de tirage ou de rétro, les ressorts 53 du deuxième étage de la friction.

Si le développement circonférential L précisé ci-dessus correspond exactement au jeu angulaire J, la mise hors service des ressorts 95 en rétro se fait au point d'abscisse D1; si ce développement circonférentiel L correspondant angulairement à une valeur inférieure à celle du jeu angulaire J, elle se fait pour un point d'abscisse inférieure à celle du point D1.

Tel que représenté, un jeu peut subsister circonférentiellement entre les prolongements 79 des plaquettes 70 et les becs de retenue 75, l'appui de ces plaquettes 70 sur le flasque 71 se faisant, par leur tranche latérale correspondante, dans l'évidement 73 correspondant de ce flasque 71; en variante, les prolongements 79 des plaquettes 70 peuvent porter circonférentiellement sur les becs de retenue 75, ceux-ci ayant alors une double fonction d'appui circonférentiel et de retenue radiale.

Bien entendu, pour les faibles couples, dès que le débattement angulaire entre la partie excitante A et la partie excitée B redevient inférieur à celui correspondant au point d'abscisse D1, les plaquettes 70 échappent aux pattes axiales 76 du voile de moyeu 51, et sont ramenées progressivement en position rétractée d'attente par les branches 85 du ressort de torsion 83 auquel elles sont attelées.

Comme précédemment, des moyens de frottement, non représentés sur les figures, sont de préférence prévus entre les plaquettes 70 et les évidements 73 dans lesquels elles sont montées coulissantes, pour retarder leur retour en position rétractée d'attente.

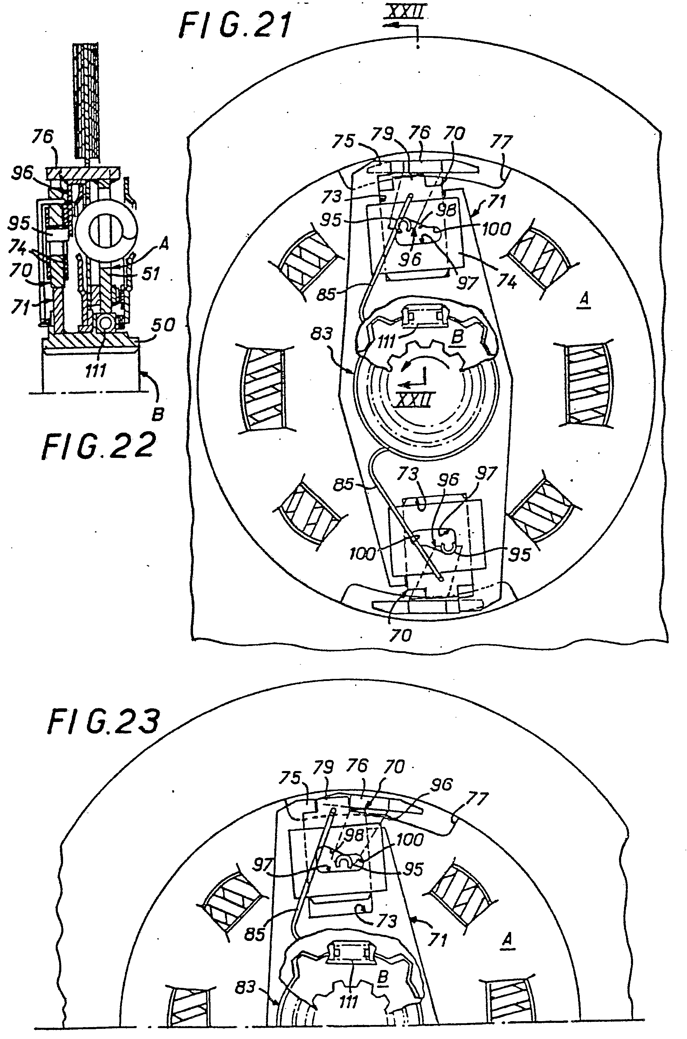

Suivant la variante de réalisation illustrée par les figures 21 à 23, des moyens de came sont prévus entre les plaquettes 70 et la partie excitante A.

Dans l'exemple de réalisation représenté, ces moyens de came comportent, pour chaque plaquette 70, un doigt 95, porté axialement par une équerre 96 solidaire de la patte axiale 76 correspondante, et une boutonnière 97, à flanc oblique 98, ménagée dans une telle plaquette 70, ledit doigt 95 étant engagé dans ladite boutonnière 97 en portant contre le flanc oblique 98 de celle-ci.

En pratique, dans l'exemple de réalisation représenté, la boutonnière 97 comporte, en bout de son flanc oblique 98, un prolongement circonférentiel 100.

Le fonctionnement de cette variante de réalisation est analogue à celui décrit précédemment: au fur et à mesure du débattement angulaire entre la partie excitante A et la partie excitée B, les doigts 95 associés aux plaquettes 70 provoquent progressivement un déplacement radial de celles-ci les conduisant, après absorption du jeu angulaire J, à venir s'insérer circonférentiellement, par leur prolongement 79, entre les becs de retenue 75 et les pattes axiales 76, figure 23.

Si un tel débattement angulaire se poursuit, les doigts 95 suivent les prolongement circonférentiels 100 des boutonnières 97, sans interférence sur le fonctionnement de l'ensemble.

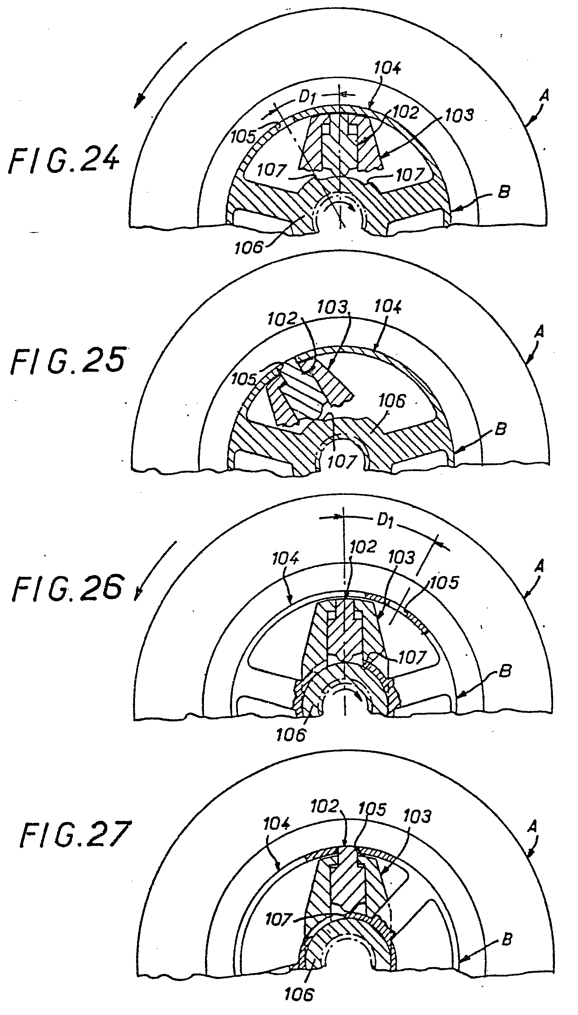

Suivant les variantes de réalisation illustrées par les figures 24 à 27, sur lesquelles les parties excitante A et excitée B ne sont que succinctement représentées, l'organe de verrouillage mis en oeuvre forme un pêne 102, qui est monté coulissant radialement dans un guide 103 solidaire d'une première de ces parties A, B, en regard d'une couronne 104 solidaire de la deuxième desdites parties, ladite couronne comportant une ouverture 105, formant gâche pour le pêne 102, et étant portée par un moyeu 106 muni en surface de moyens de came 107 propres à solliciter le pêne 102 en direction de la gâche 105, ces moyens de came 107 étant angulairement disposés au droit de l'ouverture formant gâche 105.

Dans la forme de réalisation illustrée par les figures 24 et 25, le guide 103 appartient à la partie excitante A, tandis que la couronne 104 appartient à la partie excitée B.

En variante, figures 26 et 27, le guide 103 appartient à la partie excitée B, tandis que la couronne 104 appartient à la partie excitante A.

Quoi qu'il en soit, à l'arrêt, figures 24 et 26, le guide 103, et donc le pêne 102, sont angulairement à distance de l'ouverture formant gâche 105 et des moyens de came 107.

Par contre, dès que le débattement angulaire de la partie excitante A et la partie excitée B atteint une valeur déterminée, la valeur D1 précisée ci-dessus, par exemple, le pêne 102 se trouve en regard de l'ouverture formant gâche 105, et, poussé par les moyens de came 107, en pratique une simple rampe, il pénètre dans cette ouverture, figure 25.

La partie excitante A trouve dès lors un appui circonférentiel positif sur la partie excitée B, comme précédemment, à travers le guide 103, le pêne 102, la couronne 104, et le moyeu 106.

Bien entendu, des moyens de rappel sont prévus pour ramener le pêne 102 à sa position rétractée de repos lorsque le débattement angulaire entre la partie excitante A et la partie excitée B redevient inférieur à la valeur D1.

Et, comme précédemment, des moyens de frottement sont de préférence prévus entre le pêne 102 et le guide 103 pour retarder le retour en position rétractée de repos de ce pêne.

Ainsi qu'on l'aura compris, dans toutes les formes de réalisation décrites ci-dessus, le ou les organes de verrouillage mis en oeuvre suivant l'invention sont inévitablement sensibles à la force centrifuge, et celle-ci peut avoir un effect positif sur eux, en pratique aux vitesses suffisamment élevées, notamment pour leur maintien en temps voulu en position déployée de service.

Mais leur passage de leur position rétractée d'attente à leur position déployée de service se fait de manière positive indépendamment de cette vitesse.

Il peur donc se faire et c'est le cas en pratique, à des vitesses insuffisantes pour que la force centrifuge ait, elle, en effet sensible.

Bien entendu la présente invention ne se limite pas aux formes de réalisation décrites et représentées, mais englobe toute variante d'exécution et/ou de combinaison de leurs divers éléments.

En outre, au lieu d'intervenir lors du passage d'un fonctionnement en tirage à un fonctionnement en rétro, l'organe d'interposition suivant l'invention peut aussi bien intervenir lors du passage d'un fonctionnement en rétro à un fonctionnement en tirage.

Enfin, le domaine d'application de l'invention ne se limite évidemment pas à celui des seules frictions d'embrayage pour véhicules automobiles, mais s'étend à l'ensemble de celui des dispositifs amortisseurs de torsion.

Par ailleurs, et ainsi qu'on l'aura compris, c'est par simple commodité qu'on a qualifié ici de "rétractée" la position d'attente des organes de verrouillage et de "déployée" leur position de service.

## Revendications

1. Dispositif amortisseur de torsion, en particulier friction d'embrayage, du genre comportant au moins deux parties coaxiales (A, B) montées rotatives l'une par rapport à l'autre, dans les limites d'un débattement angulaire déterminé, et à l'encontre de moyens élastiques (11, 111) aptes à agir circonférentiellement entre elles pour une plage au moins dudit débattement angulaire, dits ci-après moyens élastiques à action circonférentielle, caractérisé et ce qu'il comporte au moins un organe de verrouillage (15, 70, 102), qui est sensible au débattement angulaire entre lesdites parties (A, B), à l'encontre de moyens de rappel, et qui est ainsi mobile de manière réversible entre une position rétractée d'attente, pour laquelle il est sans effet et laisse donc une libre capacité d'action aux moyens élastiques à action circonférentielle (11, 111), et une position déployée de service pour laquelle, au-delà d'un débattement angulaire déterminé entre lesdites parties (A, B), il assure au appui circonférentiel positif d'une desdites parties (A, B) sur l'autre, pour l'un au moins des sens de rotation, et met donc hors service lesdits moyens élastiques à action circonférentielle (11, 111), au moins pour une portion de ladite plage de débattement.

2. Dispositif amortisseur de torsion suivant la revendication 1, caractérisé en ce que l'organe de verrouillage (15) est en levier d'arc-boutement, qui, à l'une de ses extrémités est monté pivotant sur une premiere des parties (A, B) concernées, autour d'un axe parallèle à celui de celles-ci, et auquel, pour son passage en position déployée de service, il est associé un poussoir (20) propre à agir sur lui en position excentrée vis-à-vis de son axe de rotation, en prenant appui sur la deuxième desdites parties (A, B).

3. Dispositif amortisseur de torsion suivant la revendication 2, caractérisé en ce que le poussoir (20) associé au levier d'arc-boutement (15) est formé par un doigt de poussée monté coulissant sur ladite deuxième partie.

4. Dispositif amortisseur de torsion suivant la revendication 3, caractérisé en ce que ledit doigt de poussée (20) est engagé dans un logement borgne (26) du levier d'arc-boutement (15) et est élastiquement déformable en sorte qu'il constitue par lui-même les moyens de rappel associés audit levier d'arc-boutement (15).

5. Dispositif amortisseur de torsion suivant la revendication 2, caractérisé en ce que le poussoir (20) associé au levier d'arc-boutement (15) forme une partie intégrante de celui-ci, ledit poussoir étant constitué par un bossage (33) dudit levier.

6. Dispositif amortisseur de torsion suivant la revendication 2, caractérisé en ce que le levier d'arc-boutement (15) est constitué par un fil globalement plié en boucle, ledit fil présentant une traverse médiane (40), deux bras latéraux (27), et, en bout de ceux-ci, deux coudes en forme de crosse (41), qui constituent conjointement le bossage de ce levier formant le poussoir associé à celui-ci.

7. Dispositif amortisseur de torsion suivant l'une quelconque des revendications 2 à 6, caractérisé et ce que, par son extrémité libre, c'est-à-dire par son extrémité opposée à son axe d'articulation, le levier d'arc-boutement (15) est susceptible de venir porter sur un épaulement de butée (24) prévu à cet effet sur la deuxième desdites parties (A, B).

8. Dispositif amortisseur de torsion suivant l'une quelconque des revendications 2 à 6, caractérisé en ce que, par son extrémité libre, c'est-à-dire par son extrémité opposée à son axe d'articulation, le levier d'arc-boutement (15) agit sur un galet (29) susceptible de venir se coincer entre deux épaulements (31, 32), l'un appartenant à l'une des deux parties (A, B) concernées, l'autre appartenant à l'autre desdites parties (A, B).

9. Dispositif amortisseur de torsion suivant l'une quelconque des revendications 2 à 8, dans lequel des moyens d'engrènement à jeu circonférentiel (13) sont prévus entre les deux parties (A, B) concernées, caractérisé en ce que le levier d'arc-boutement (15) est logé dans un évidement (14) desdits moyens d'engrènement (13).

10. Dispositif amortisseur de torsion suivant l'une quelconque des revendications 2 à 8, dans lequel des moyens d'engrènement à jeu circonférentiel (13) sont prévus entre les deux parties (A, B) concernées, lesdits moyens d'engrènement (13) comportant une denture (10A) pour l'une desdites parties, et une denture (10B) pour l'autre, caractérisé en ce que le levier d'arc-boutement (15) comporte deux bras (27) disposés chacun respectivement de part et d'autre d'une telle denture (10A, 10B).

11. Dispositif amortisseur de torsion suivant l'une quelconque des revendications 2 à 10, caractérisé en ce que le levier d'arc-boutement (15) s'étend globalement tangentiellement à une circonférence de l'ensemble.

12. Dispositif amortisseur de torsion suivant l'une quelconque des revendications 2 à 11 caractérisé en ce que des moyens de frottement sont prévus entre le levier d'arc-boutement (15) et son axe de rotation, pour retarder le retour en position rétractée dudit levier d'arc-boutement sous l'action des moyens de rappel qui lui sont associés.

13. Dispositif amortisseur de torsion suivant la revendication 1, caractérisé en ce que l'organe de verrouillage est constitué par une simple plaquette (70) montée coulissante dans un plan perpendiculaire à l'axe du dispositif, et les moyens de rappel qui lui sont associés comportent un ressort de torsion (83), dont la partie médiane de torsion (84) entoure un moyeu (50) solidaire d'une première des parties rotatives (A, B) concernées, et dont une branche (85) est attelée à ladite plaquette (70).

14. Dispositif amortisseur de torsion suivant la revendication 13, caractérisé en ce que, pour passage en position déployée de service de ladite plaquette, la branche (85) du ressort de torsion (83) attelée à ladite plaquette (70) présente un coude (88) par lequel elle est susceptible de venir porter contre un épaulement (92) solidaire de la deuxième des parties rotatives (A, B), concernées, et la partie médiane de torsion (84) dudit ressort (83) est bloquée angulairement, par exemple par pincement, vis-à-vis du moyeu (50) qu'elle entoure.

15. Dispositif amortisseur de torsion suivant la revendication 13, caractérisé en ce que, pour passage en position déployée de service de ladite plaquette (70), des moyens de came (95, 97) sont prévus entre celle-ci et la deuxième des parties (A, B) concernées.

16. Dispositif amortisseur de torsion suivant la revendication 15, caractérisé en ce que ces moyens de came (95, 97) comportent un doigt (95) porté axialement par ladite deuxième partie (A, B), et une boutonnière (97) à flanc oblique (98) ménagée dans la plaquette (70), ledit doigt (95) étant engagé dans ladite boutonnière (97).

17. Dispositif amortisseur de torsion suivant la revendication 16, caractérisé en ce que ladite boutonnière (97) a un prolongement circonférentiel (100).

18. Dispositif amortisseur de torsion suivant l'une quelconque des revendications 13 à 17, caractérisé en ce que sont prévus, en positions diamétralement opposées, deux organes de verrouillage (70), chacun étant constitué par une plaquette, et ces organes de verrouillage (70) ont en commun leur ressort de rappel (83), les deux branches (85) de celui-ci étant chacune respectivement attelées à une telle plaquette (70) et la partie médiane de torsion (84) dont elles sont issues résultant d'un enroulement conjoint en hélice des deux brins d'un fil au préalable plié en U.

19. Dispositif amortisseur de torsion suivant l'une quelconque des revendications 13 à 18, caractérisé en ce que l'une des parties (A, B) concernées porte un guide (73) avec lequel la plaquette (70) formant l'organe de verrouillage est en prise, et l'autre desdites parties (A, B) comporte une patte (76), qui s'étend axialement et qui interfère avec le trajet de ladite plaquette (70) le long de son guide (73).

20. Dispositif amortisseur de torsion suivant la revendication 19, caractérisé en ce que ledit guide (73) est constitué par un évidement allongé radialement, qui est formé dans un flasque (71) solidaire de la partie (A, B) concernée, et dans lequel la plaquette (70) formant l'organe de verrouillage est montée coulissante.

21. Dispositif amortisseur de torsion suivant la revendication 20, caractérisé en ce que ledit flasque (71) présente, à l'extrémité de l'évidement (73) formant le guide, un bec de retenue (75) qui fait saillie dans ledit évidement (73), et, au-delà d'un épaulement (78) propre à coopérer radialement en butée contre ledit bec de retenue (75), la plaquette (70) formant l'organe de verrouillage comporte un prolongement radial (79) sur lequel est susceptible de venir porter la patte axiale (76) de l'autre partie (A, B).

22. Dispositif amortisseur de torsion suivant l'une quelconque des revendications 20, 21, caractérisé en ce que ledit flasque (71) est solidaire du moyeu (50) de ladite première partie.

23. Dispositif amortisseur de torsion suivant la revendication 1, caractérisé en ce que l'organe de verrouillage forme un pêne (102) qui est monté coulissant radialement dans un guide (103) solidaire d'une première des parties rotatives (A, B,) concernées, en regard d'une couronne (104) solidaire de la deuxième desdites parties rotatives (A, B), ladite couronne (104) comportant une ouverture formant gâche (105) pour ledit pêne (102) et étant portée par un moyeu (106) muni est surface de moyens de came (107) propres à solliciter ledit pêne (102) en direction de ladite gâche (105).

24. Dispositif amortisseur de torsion suivant l'une quelconque des revendications 19 à 23, caractérisé en ce que des moyens de frottement sont prévus entre un organe de verrouillage (70, 102) et son guide (73, 103), pour retarder le retour en position rétractée dudit organe de verrouillage (70, 102) sous l'action des moyens de rappel qui lui sont associés.

**Patentansprüche**

1. Drehschwingungsdämpfvorrichtung, insbesondere Reibungskupplung, mit wenigstens zwei koaxialen Teilen (A, B) die relativ zueinander innerhalb der Grenzen einer bestimmten Winkelbewegung und gegen eine elastische Einrichtung (11, 111) drehbar sind, welche um Umfang untereinander für mindestens einen Bereich der Winkelbewegung wirksam ist und im folgenden als um Umfang wirksame elastische Einrichtung bezeichnet ist, dadurch gekennzeichnet, daß die Einrichtung wenigstens ein Verriegelungsorgan (15, 70, 102), aufweist, das auf Winkelbewegungen zwischen den Teilen (A, B) gegen eine Rückholeinrichtung anspricht und das zwischen einer zurückgezogenen Wartestellung, in der es wirkungslos ist und dabei die am Umfang wirksame elastische Vorrichtung (11, 111) frei wirken läßt und einer ausgefahrenen Betriebsstellung reversibel bewegbar ist, in welchem es über eine bestimmte Winkelbewegung hinaus zwischen den Teilen (A, B) eine zwangsläufige Abstützung am Umfang eines der Teile (A, B) an dem anderen Teil in wenigstens einer Drehrichtung sicherstellt und damit die um Umfang wirksame elastische Einrichtung (11, 111) mindestens für einen Abschnitt des Bereiches der Winkelbewegung ausser Betrieb setzt.

2. Vorrichtung nach Anspruch 1, dadurch gekennzeichnet, daß das Verriegelungsorgan (15) ein Klemmhebel ist, welcher an einem Ende an einem ersten Teil (A, B) um eine Achse parallel zu den Teilen schwenkbar ist und dem zum Durchgang in die ausgefahrene Betriebsstellung ein Stößel (20) zugeordnet ist, welcher auf den Klemmhebel in eine bezüglich seiner Drehachse aussermittigen Stellung einwirkt, wobei er sich am zweiten Teil (A, B) abstützt.

3. Vorrichtung nach Anspruch 2, dadurch gekennzeichnet, daß der dem Klemmhebel (15) zugeordnete Stößel (20) aus einem Drückerstift besteht, der verschiebbar am zweiten Teil gelagert ist.

4. Vorrichtung nach Anspruch 3, dadurch gekennzeichnet, daß der Drückerstift (20) in ein Sackloch (26) des Klemmhebels (15) eingesetzt und elastisch verformbar ist derart, daß er selbst als dem Klemmhebel (15) zugeordnete Rückholvorrichtung ausgebildet ist.

5. Vorrichtung nach Anspruch 2, dadurch gekennzeichnet, daß der dem Klemmhebel (15) zugeordnete Stößel (20) einen einstückigen Teil des Klemmhebels bildet und als eine Nase (33) des Klemmhebels ausgebildet ist.

6. Vorrichtung nach Anspruch 2, dadurch gekennzeichnet, daß der Klemmhebel (15) aus einem i.w. zu einer Schleife gebogenen Draht besteht, welcher ein in der Mitte liegendes Querstück (40), zwei seitliche Arme (27) und an deren Enden zwei Biegungen in Form von Abkröpfungen (41) aufweist, welche gemeinsam die Nase des Hebels bilden, die als ihm zugeordnete Stößel ausgebildet ist.

7. Vorrichtung nach einem des Ansprüche 2 bis 6, dadurch gekennzeichnet, daß der Klemmhebel (15) mit sinem freien Ende, d.h. mit seinem der Schwenkachse gegenüberliegenden Ende an einer Anschlagschulter (24) zur Abstützung kommt, welche zu diesem Zweck am zweiten Teil (A, B) vorgesehen ist.

8. Vorrichtung nach einem der Ansprüche 2 bis 6, dadurch gekennzeichnet, daß der Klemmhebel (15) mit seinem freien Ende, d.h. mit seinem der Schwenkachse gegenüberliegenden Ende auf eine Rolle (29) einwirkt, die zwischen zwei Schultern (31, 32) verklemmbar ist, von denen eine dem einen Teil (A, B) und die andere dem anderen Teil (A, B) zugeordnet ist.

9. Vorrichtung nach einem der Ansprüche 2 bis 8, bei der zwischen den beiden Teilen (A, B) Eingriffsmittel (13) mit einem Umfangsspiel vorgesehen sind, dadurch gekennzeichnet, daß der Klemmhebel (15) in einer Aussparung (14) der Eingriffsmittel (13) angeordnet ist.

10. Vorrichtung nach einem der Ansprüche 2 bis 8, bei der zwischen den beiden Teilen (A, B) Eingriffsmittel (13) mit einem Umfangsspiel vorgesehen sind, welche aus einer Verzahnung (10A) an einem Teil und einer Verzahnung (10B) am anderen Teil bestehen, dadurch gekennzeichnet, daß der Klemmhebel (15) zwei Arme (27) hat, welche jeweils zu beiden Seiten einer Verzahnung (10A, 10B) angeordnet sind.

11. Vorrichtung nach einem der Ansprüche 2 bis 10, dadurch gekennzeichnet, daß sich der Klemmhebel (15) im wesentlichen tangential zum Umfang der Vorrichtung erstreckt.

12. Vorrichtung nach einem der Ansprüche 2 bis 11, dadurch gekennzeichnet, daß eine Reibvorrichtung zwischen dem Klemmhebel (15) und seiner Drehachse zur Verzögerung der Rückkehr in die zurückgezogene Stellung des Klemmhebels unter der Einwirkung der diesem zugeordneten Rückholeinrichtung vorgesehen ist.

13. Vorrichtung nach Anspruch 1, dadurch gekennzeichnet, daß das Verriegelungsorgan aus einer einfachen Platte (70) besteht, die in einer zur Achse der Vorrichtung rechtwinkligen Ebene verschiebbar gelagert ist, und daß die Rückholeinrichtung aus einer Torsionsfeder (83) besteht, deren mittlerer Torsionsbereich (84) eine Nabe (50) umgibt, welche mit einer der rotierenden Teile (A, B) verbunden ist, und deren Arm (85) mit der Platte (70) gekuppelt ist.

14. Vorrichtung nach Anspruch 13, dadurch gekennzeichnet, daß für den Übergang in die ausgefahren Betriebsstellung der Platte der mit diesem gekuppelte Arm (85) der Torsionsfeder (83) eine Biegung (88) aufweist, mit der er an einem Anschlag (92) abstützbar ist, welcher mit dem zweiten rotierenden Teil (A, B) verbunden ist, und daß der mittlere Torsionsbereich (84) der Torsionsfeder (83) in Bezug auf eine Winkelbewegung, beispielsweise durch Einklemmen, mit der von ihr umgebenen Nabe (50) blockiert ist.

15. Vorrichtung nach Anspruch 13, dadurch gekennzeichnet, daß zum Übergang in die ausgefahrene Betriebsstellung der Platte (70) zwischen dieser und dem zweiten rotierenden Teil (A, B) eine Nockeneinrichtung (95, 97) vorgesehen ist.

16. Vorrichtung nach Anspruch 15, dadurch gekennzeichnet, daß die Nockeneinrichtung (95, 97) einen axial verlaufenden, vom zweiten Teil (A, B) getragenen Finger (95) und eine in der Platte (70) vorgesehene Aussparung (97) mit schräger Flanke (98) aufweist, und daß der Finger (95) in die Aussparung (97) eingreift.

17. Vorrichtung nach Anspruch 16, dadurch gekennzeichnet, daß die Aussparung (97) eine kreisförmige Verlängerung (100) aufweist.

18. Vorrichtung nach einem der Ansprüche 13 bis 17, dadurch gekennzeichnet, daß im diametral sich gegenüberliegenden Stellungen zwei Verriegelungsorgane (70) vorgesehen sind, von denen jedes durch eine Platte gebildet ist und die eine gemeinsame Rückholfeder (83) haben, deren beide Arme (85) jeweils mit einer der Platte (70) gekoppelt sind und daß deren mittlerer Torsionsbereich (84), von dem die beiden Arme ausgehen, aus einer gemeinsamen, schraubenförmigen Wicklung zweier Drahtabschnitte eines vorher U-förmig abgebogenen Drahtes gebildet ist.

19. Vorrichtung nach einem der Ansprüche 13 bis 18, dadurch gekennzeichnet, daß einer der rotierenden Teile (A, B) eine Führung (73) trägt, mit welcher die Platte (70), welche das Verriegelungsorgan bildet, in Eingriff steht und daß der andere Teil (A, B) eine Lasche (76) aufweist, die sich axial erstreckt und in die Bewegungsbar der Platte (70) in ihrer Führung (73) eingreift.

20. Vorrichtung nach Anspruch 19, dadurch gekennzeichnet, daß die Führung (73) aus einer radial verlängerten Aussparung besteht, welche in einem Flansch (71) des betreffenden damit verbundenen Teils (A, B) vorgesehen ist und in der die als Verriegelungsorgan ausgebildete Platte (70) verschiebbar gelagert ist.

21. Vorrichtung nach Anspruch 20, dadurch gekennzeichnet, daß der die Führung bildende Flansch (71) am Ende der Aussparung (73) eine Haltenase (75) aufweist, welche in die Aussparung (73) vorsteht, und daß jenseits einer Schulter (78), die in radiale Anlage mit der Haltenase (75) zusammenwirkt, die das Verriegelungsorgan bildende Platte (70), eine radiale Verlängerung (79) aufweist, an welcher sich die axiale Lasche (76) des anderen Teils (A, B) abstützen kann.

22. Vorrichtung nach einem der Ansprüche 20 und 21 dadurch gekennzeichnet, daß der Flansch (71) mit der Nabe (50) des ersten Teils (A, B) verbunden ist. ·

23. Vorrichtung nach Anspruch 1, dadurch gekennzeichnet, daß das Verriegelungsorgan ein Riegel (102) ist, der radial verschiebbar in einer Führung (103) angeordnet ist, welche mit einem ersten drehbaren Teil (A, B) gegenüber einem Ring (104) verbunden ist, der mit dem zweiten drehbaren Teil (A, B) verbunden ist und daß der Ring (104) eine eine Falle bildende Öffnung (105) für den Riegel (102) hat und von einer Nabe (106) getragen ist, welche an ihrer Oberfläche Nockeneinrichtungen (107) zum Verschieben des Riegels (102) in Richtung auf die Öffnung (105) aufweist.

24. Vorrichtung nach einem der Ansprüche 19 bis 23, dadurch gekennzeichnet, daß zwischen einem Verriegelungsorgan (70, 102) und seiner Führung (73, 103) Reibvorrichtungen zum Verzögern der Rückkehr des Verriegelungsorgans (70, 102) in die zurückgezogene Stellung unter der Wirking der Rückholeinrichtung vorgesehen sind.

## Claims

1. Torsion damping device, in particular a clutch plate assembly, of the kind comprising at least two coaxial parts (A, B) mounted for rotation relative to each other within the limits of a predetermined angular movement against the action of elastic means (11, 111) capable of acting circumferentially therebetween for at least a range of the said angular movement, the said means being referred to hereinafter as circumferentially acting elastic means, characterised in that the torsion damping device comprises at least one locking member (15, 70, 102) which is sensitive to the angular movement between the said parts (A, B) against the action of return means, and which is thus movable reversibly between a retracted standby position, in which it is inoperative and therefore gives full freedom of action to the circumferentially acting elastic means (11, 111), and an extended operative position in which, beyond a predetermined angular movement between the said parts (A, B), it ensures the positive circumferential support of one of the said parts (A, B) on the other for at least one of the directions of rotation, and thus puts the said circumferentially acting elastic means (11, 111) out of action for at least a part of the said movement range.

2. Torsion damping device according to claim 1, characterised in that the locking means (15) is a buttress lever which at one of its ends is pivotally mounted on a first of the parts (A, B) concerned about an axis parallel to that of the said parts, and with which for the purpose of moving it to the extended operative position there is associated a push-rod (20) capable of acting thereon in an accentric position relative to its axis of rotation by bearing against the second of the said parts (A, B).

3. Torsion damping device according to claim 2, characterised in that the push-rod (20) associated with the buttress lever (15) is formed by a thrust finger slidingly mounted on the said second part.

4. Torsion damping device according to claim 3, characterised in that the said thrust finger (20) is engaged in a blind hole (26) on the buttress lever (15) and is elastically deformable so that it itself comprises the return means associated with the said buttress lever (15).

5. Torsion damping device according to claim 2, characterised in that the push-rod (20) associated with the buttress lever (15) forms an integral part of the latter, the said push-rod being formed by a boss (33) on the said lever.

6. Torsion damping device according to claim 2, characterised in that the buttress lever (15) comprises a wire generally folded into a loop and having a median cross-part (40), two lateral arms (27), and, at the end thereof, two crook-shaped bends (41) which together constitute the boss of the said lever forming the push-rod associated therewith.

7. Torsion damper device according to any one of claims 2 to 6, characterised in that by its free end, that is to say its end opposite in that by its free end, that is to say its end opposite to its pivot axis, the buttress lever (15) is capable of coming to bear against an abutment shoulder (24) provided for the purpose on the second of the said parts (A, B).

8. Torsion damper device according to any one of claims 2 to 6, characterised in that by its free end, that is to say its end opposite to its pivot axis, the buttress lever (15) acts on a roller (29) capable of being wedged between two shoulders (31, 32), one of which belongs to one of the two parts (A, B) concerned and the other to the other of the said parts (A, B).

9. Torsion damper device according to any one of claims 2 to 8, in which meshing means (13) having circumferential play are provided between the two parts (A, B) concerned, characterised in that the buttress lever (15) is housed in a recess (14) in the said meshing means (13).

10. Torsion damping device according to any one of claims 2 to 8, in which meshing means (13) having circumferentially play are provided between the two parts (A, B) concerned, these meshing means (13) comprising a set of teeth (10A) for one of the said parts and a set of teeth (10B) for the other, characterised in that the buttress lever (15) comprises two arms (27), each disposed respectively on each side of such a set of teeth (10A, 10B).

11. Torsion damping device according to any one of claims 2 to 10, characterised in that the buttress lever (15) extends substantially tangentially to a circumference of the assembly.

12. A torsion damping device according to any one of claims 2 to 11, characterised in that friction means are provided between the buttress lever (15) and its pivot pin in order to delay the return of the said buttress lever to the retracted position under the action of the return means associated therewith.

13. Torsion damping device according to claim 1, characterised in that the locking means comprises a simple plate (70) slidingly mounted in a plane perpendicular to the axis of the device, and that the return means associated with it comprise a torsion spring 83 which median torsion portion (84) surrounds a hub (50) fast with a first of the rotatable parts (A, B) concerned and one branch (85) of which is attached to the said plate (70).

14. Torsion damping device according to claim 13, characterised in that for the movement of the said plate to the extended operative position, the branch (85) of the torsion spring (83) which is attached to the said plate (70) has a bend (88) by which it is capable of coming to bear against a shoulder (92) fast with the second of the rotatable parts (A, B) concerned, and that the median torsion portion (84) of the said spring (83) is angularly blocked, for example by clamping, in relation to the hub (50) which it surrounds.

15. Torsion damping device according to claim 13, characterised in that, for the purpose of moving the said plate (70) to the extended operative position, cam means (95, 97) are provided between the said plate and the second of the parts (A, B) concerned.

16. Torsion damping device according to claim 15, characterised in that the said cam means (95, 97) comprise a finger (95) carried axially by the said second part (A, B) and also a slot (97) having an oblique flank (98) and formed in the plate (70), the said finger (95) being engaged in the said slot (97).

17. Torsion damping device according to claim 16, characterised in that the said slot (97) has a circumferential extension (100).

18. Torsion damping device according to any one of claims 13 to 17, characterised in that two locking members (70) are provided in diametrically opposite positions, each such member comprising a plate, and that these locking members (70) have their return spring (83) in common, the two branches (85) of this spring each being attached respectively to such a plate (70) and the median torsion portion (84) from which they emerge resulting from conjointly helically winding the two strands of a wire previously folded into a U.

19. Torsion damping device according to any one of claims 13 to 18, characterised in that one of the parts (A, B) concerned carries a guide (73) with which the plate (70) forming the locking member is in engagement, and that the other of the said parts (A, B) has a lug (76) which extends axially and which intersects the path of the said plate (70) along its guide (73).

20. Torsion damping device according to claim 19, characterised in that the said guide (73) consists of a radially elongate recess which is formed in a bracket (71) fast with the part (A, B) concerned and in which the plate (70) forming the locking member is slidingly mounted.

21. Torsion damping device according to claim 20, characterised in that the said bracket (71) is provided at the end of the recess (73) forming the guide, a retaining nose (75) which protrudes into the said recess (73) and, beyond a shoulder (78) adapted to cooperate radially for abutment against the said retaining nose (75), the plate (70) forming the locking member is provided with a radial extension (79) against which the axial lug (76) of the other part (A, B) is capable of coming to bear.

22. Torsion damping device according to any one of claims 20 or 21, characterised in that the said bracket (71) is fast with the hub (50) of the said first part.

23. Torsion damping device according to claim 1, characterised in that the locking member forms a bolt (102) which is radially slidingly mounted in a guide (103) fast with a first of the rotatable parts (A, B) concerned, facing a ring (104) fast with the second of the said rotatable parts (A, B), the said ring (104) having an opening forming a keeper (105) for the said bolt (102) and being carried by a hub (106) provided on the surface with cam means (107) adapted to urge the said bolt (102) in the direction of the said keeper (105).

24. Torsion damping device according to any one of claims 19 to 23, characterised in that friction means are provided between a locking member (70, 102) and its guide (73, 103) in order to delay the return of the said locking member (70, 102) to the retracted position under the action of the return means associated therewith.

**0 019 525**

FIG.1

FIG.2

FIG.3

FIG.4

FIG.5

FIG.6

FIG.7

FIG.8

0 019 525

0 019 525

FIG.9

FIG.10

FIG.11

FIG.12

3

0019525

FIG.13

FIG.14

FIG.17

FIG.15

FIG.16

FIG.18

FIG.19

FIG.20

# FIG.21

# FIG.22

# FIG.23

**0 019 525**

FIG.24

FIG.25

FIG.26

FIG.27

7